# EUROPEAN PATENT APPLICATION

(11) **EP 4 393 835 A1**
(43) Date of publication of application: **03.07.2024**
(21) Application number: 22859958.5
(22) Date of filing: 24.05.2022
(51) Int. Cl.: B65D 25/10, H02J 15/00

(54) **ENERGY STORAGE SYSTEM**

(30) Priority: 24.08.2021 CN 202121999876 U
(71) Applicant: Sungrow Power Supply Co., Ltd., Hefei, Anhui 230088 (CN)
(72) Inventor: GAO, Yuan, Hefei, Anhui 230088 (CN); DONG, Puyun, Hefei, Anhui 230088 (CN); LIU, Yang, Hefei, Anhui 230088 (CN)
(74) Representative: Epping - Hermann - Fischer
(86) International application number: PCT/CN2022/094603
(87) International publication number: WO 2023/024610

(57) **Abstract**

An energy storage system, comprising an energy storage apparatus (1), a mounting frame body (2) and a connector (3), wherein the mounting frame body is provided with a storage space (24), the energy storage apparatus is arranged in the storage space, and the mounting frame body is connected to the energy storage apparatus by means of the connector. The energy storage system can be independently transported without using containers for loading, thereby simplifying the work flow, and effectively improving the work efficiency; and moreover, the energy storage apparatus can be effectively prevented from swinging in the mounting frame body so as not to collide, and a relatively good quality of the energy storage apparatus is guaranteed.

## Description

The present application claims priority to Chinese Patent Application No. 202121999876.3, titled "ENERGY STORAGE SYSTEM", filed on August 24, 2021 with the China National Intellectual Property Administration, which is incorporated herein by reference in its entirety.

### FIELD

The present application relates to the technical field of backup power supply, and in particular to an energy storage system.

### BACKGROUND

An energy storage device, as a backup power source, is increasingly being used in various situations, and serves as an emergency power source of a power system to ensure reliable operation when a common power supply is powered off. The energy storage device in the conventional technology is usually transported by a container as a carrier. If the volume of the energy storage device is large, it is inconvenient to load the energy storage device into the container. The energy storage device is required to be unloaded from the container when being applied to a work scenario, and thus the operation is complicated and the working efficiency is low. During transportation, the energy storage device is prone to shaking in the container, which causes a collision.

### SUMMARY

The object of the present application is to provide an energy storage system that can achieve independent transportation without using a container for loading, simplify the work process, and effectively improve work efficiency. Moreover, the collision of the energy storage device can be effectively prevented, and a good quality of the energy storage device can be ensured.

To achieve this object, the present application adopts the following technical solutions:
An energy storage system includes:
a mounting rack with an accommodation space;
an energy storage device, arranged into the accommodation space; and
a connecting member, where the mounting rack and the energy storage device are connected through the connecting member.

In an embodiment, the mounting rack includes:
a underframe, supporting the energy storage device; and
two side-frame assemblies respectively connected to both ends of the underframe, where the accommodation space is enclosed by the underframe and the two side-frame assemblies together enclose.

In an embodiment, the underframe includes:
two first lower cross beams, which extends in a first direction and arranged in parallel and spaced apart in a second direction, where the first direction is perpendicular to the second direction; and
at least two second lower cross beams, which are arranged at intervals in the first direction, where two ends of each of the at least two second lower cross beams are respectively connected to the two first lower cross beams, and the two first lower cross beams and the at least two second lower cross beams jointly support the energy storage device.

In an embodiment, each of the two side-frame assemblies includes:
a rectangular frame located above the underframe, where the rectangular frame includes four first upper cross beams connected end to end in sequence;
vertical beams, where four corners of the rectangular frame are fixedly connected to the underframe by the vertical beams; and
a slanting beam, where a top end of one of at least one of the vertical beams and a bottom end of an adjacent one of the vertical beams are respectively connected at both ends of the slanting beam.

In an embodiment, the mounting rack further includes:
an upper cross-beam assembly located above the underframe, where both ends of the upper cross-beam assembly are respectively connected to the two side-frame assemblies.

In an embodiment, the two side-frame assemblies, the underframe, and the upper cross-beam assembly are connected to the energy storage device by the connecting member.

In an embodiment, each of the connecting members includes two connecting plates perpendicular to each other, one of the two connecting plates is detachably connected to the two side-frame assemblies, the underframe, or the upper cross-beam assembly, and the other of the two connecting plates is detachably connected to the energy storage device.

In an embodiment, the mounting rack further includes:
multiple reinforcing ribs, where both ends of each of the multiple reinforcing ribs are respectively connected to the upper cross-beam assembly and the underframe.

In an embodiment, those of the multiple reinforcing ribs on one side of the mounting rack are detachably connected to the upper cross-beam assembly and the underframe.

In an embodiment, the mounting rack further includes:
two sets of first limiting assemblies arranged on the underframe and spaced in the second direction, where the two sets of first limiting assemblies are configured to limit the position of the energy storage device in the accommodation space in the first direction.

In an embodiment, the mounting rack further includes:
two sets of second limiting assemblies arranged on the underframe and spaced apart in the first direction, where the two sets of second limiting assemblies are configured to limit the position of the energy storage device in the accommodation space in the second direction.

In an embodiment, the mounting rack includes:
two side-frame assemblies, where both ends of the energy storage device are inserted and fitted into the corresponding side-frame assemblies, respectively, and the two side-frame assemblies jointly support the energy storage device.

In an embodiment, each of the two side-frame assemblies includes:
a side frame body, which is of a cubic frame structure; and
fixing parts, where the fixing parts are formed by extending four corners on a side, which faces the other side-frame assembly, of the side frame body of one side-frame assembly in the first direction, the fixing parts arranged at the four corners of the side frame body are arranged around an outer periphery of one side of the energy storage device, and
each of the fixing parts is fixedly connected to the energy storage device by the connecting member.

In an embodiment, the energy storage system also includes:
corner fittings arranged at outermost corners of the mounting rack.

The beneficial effects of the present application are as follows:
The energy storage system according to the present application is provided with the mounting rack, the energy storage device is arranged into the accommodation space of the mounting rack, and the mounting rack and the energy storage device are connected by the connecting members, which can achieve independent transportation of the energy storage system without using the container for loading, simplify the work process, and effectively improve work efficiency. Moreover, the collision caused by shaking of the energy storage device in the mounting rack can be effectively prevented, and the good quality of the energy storage device can be ensured.

### BRIEF DESCRIPTION OF THE DRAWINGS

Figure 1 is a schematic view of an energy storage system according to Embodiment 1 of the present application;
Figure 2 is a schematic view of a mounting rack of an energy storage system according to Embodiment 2 of the present application;
Figure 3 is a schematic view of a mounting rack of an energy storage system according to Embodiment 3 of the present application;
Figure 4 is a partial schematic view of the mounting rack of the energy storage system according to Embodiment 3 of the present application;
Figure 5 is a schematic view of an energy storage system according to Embodiment 4 of the present application; and
Figure 6 is a schematic view of an energy storage system according to Embodiment 5 of the present application.

The reference signs in the figures are listed as follows:
1. energy storage device;
2. mounting rack; 21. underframe; 211. first lower cross beam; 212. second lower cross beam; 22. side-frame assembly; 221. vertical beam; 222. slanting beam; 223. first upper cross beam; 224. third lower cross beam; 225. fixing part; 23. upper cross-beam assembly; 231. second upper cross beam; 24. accommodation space; 25. reinforcing rib; 251. first reinforcing rib; 252. second reinforcing rib;
3. connecting member;
4. corner fitting;
5. first limiting assembly; 51. first limiting member; 511. first plate; 512. second plate; 6. second limiting assembly; and 61. second limiting member.

### DETAILED DESCRIPTION OF EMBODIMENTS

The present application is further described in detail below in conjunction with the drawings and embodiments. It can be understood that, the specific embodiments described here are only used to explain the present application, but not to limit the present invention. In addition, it should be noted that, for the convenience of description, only some related to the present application rather than all structures are shown in the drawings.

In the description of the present application, unless otherwise clearly specified and limited, terms "connect to", "connect", and "fix" should be understood in a broad sense, for embodiment, may be a fixed connection, a detachable connection, or an integrated connection; may be a mechanical connection or an electric connection; may be a direct connection, or an indirect connection through an intermediary, and may be an internal connection of two elements or an interaction relationship between two elements. For those skilled in the art, the specific meanings of the terms in the present application can be understood based on specific situations.

In the present application, unless otherwise clearly specified and limited, a first feature being "on" or "under" a second feature may include the first feature directly contacting the second feature, and may also include the first feature not directly contacting the second feature but contacting through another feature between the first and second features. Moreover, the first feature being "on", "above" and "over" the second feature includes that the first feature is directly above and obliquely above the second feature, or simply indicates that the first feature is horizontally higher than the second feature. The first feature being "below", "under" and "beneath" the second feature includes that the first feature is directly below and obliquely below the second feature, or simply indicates that the first feature is horizontally lower than the second feature.

In the description of the embodiments, terms "up", "down", "right" and other orientations or positional relationships are based on the orientations or positional relationships shown in the drawings, and are only for the convenience of description and simplification of operations, rather than indicating or implying that devices or elements must have specific orientations, or must be constructed and operated in specific orientations, and thus should not be understood as limitations to the present application. In addition, terms "first" and "second" are only used to distinguish in description and have no special meaning.

### Embodiment 1:

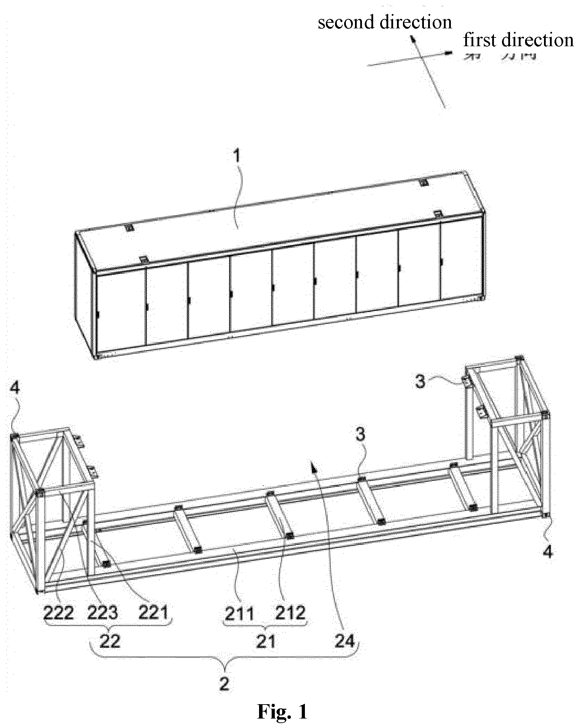

As shown in Figure 1, an energy storage system is provided according to Embodiment 1. The energy storage system includes a mounting rack 2, an energy storage device 1, and a connecting member 3. The mounting rack 2 has an accommodation space 24, in which the energy storage device 1 is arranged. The mounting rack 2 and the energy storage device 1 are connected as a whole by the connecting member 3, which can realize independent transportation of the energy storage system without being additionally loaded into a container. Moreover, the energy storage system can be applied as a whole in a work scenario without disassembly and assembly operations, thereby improving work efficiency. The provision of the connecting member 3 can also prevent collision caused by shaking of the energy storage device 1 in the mounting rack 2, thereby ensuring good quality of the energy storage device 1. The energy storage device 1 also can be disassembled from the mounting rack 2 to be separately applied according to requirements. Disassembly and assembly are performed by the connecting member 3, which is easy to operate.

Specifically, as shown in Figure 1, the mounting rack 2 includes an underframe 21 and two side-frame assemblies 22. The two side-frame assemblies 22 are respectively connected to both ends of the underframe 21. The underframe 21 and the two side-frame assemblies 22 together enclose the accommodation space 24, and the energy storage device 1 is placed into the accommodation space 24. The underframe 21 supports a bottom of the energy storage device 1. The two side-frame assemblies 22 protect both sides of the energy storage device 1. The underframe 21 and the two side-frame assemblies 22 can protect the energy storage device 1 in all directions, effectively preventing the energy storage device 1 from being separated from the mounting rack 2. During the assembly, the energy storage device 1 can be put in place from a side of the accommodation space 24 or from an upper opening of the accommodation space 24, so that the installation way of the energy storage equipment 1 is various. Since the accommodation space 24 has the upper opening, it facilitates for a crane of hoisting the energy storage device 1 out of the accommodation space 24.

The structure of the underframe 21 is described in conjunction with Figure 1. As shown in Figure 1, the underframe 21 includes two first lower cross beams 211. Each of the two first lower cross beams 211 extends in a first direction. The two first lower cross beams 211 are parallel and spaced apart in a second direction. A distance between outside edges of the two first lower cross beams 211 is greater than a width of the energy storage device 1. A distance between inside edges of the two first lower cross beams 211 is smaller than the width of the energy storage device 1. The bottom portion of the energy storage device 1 is completely seated on the underframe 21, and the underframe 21 is formed with less material, so that the material of the underframe 21 can be saved and the weight of the underframe 21 is light.

Further, as shown in Figure 1, at least two second lower cross beams 212 are provided between the two first lower cross beams 211. The at least two second lower cross beams 212 are arranged at intervals in the first direction. Two ends of each of the at least two second lower cross beams 212 are respectively connected to the two first lower cross beams 211. The first lower cross beams 211 and the second lower cross beams 212 jointly support the energy storage device 1, which can support the energy storage device 1 stably. In an embodiment, the at least two second lower cross beams 212 are arranged at even intervals, which can apply a relatively uniform support force to the energy storage device 1, avoid stress concentration in one single second lower cross beam 212, avoid breakage of one single second lower cross beam 212, and provide stable support of the underframe 21 for the energy storage device 1. Of course, the positions of the second lower cross beams 212 may also be reasonably arranged according to the weight distribution of the energy storage device 1, which is not limited.

Specifically, the first lower cross beams 211 and the second lower cross beams 212 can be fixed by welding, rivets, or screws to obtain structural stability of the underframe 21. Fixation by welding can make the structure of the underframe 21 stable. Fixation by screws or pins can facilitate an operator of quickly replacing the first lower cross beam 211 or the second lower cross beam 212 that is damaged.

As shown in Figure 1, each of the two side-frame assemblies 22 includes a rectangular frame, vertical beams 221, and a slanting beam 222. The rectangular frame is located above the underframe 21. The rectangular frame includes four first upper cross beams 223 that are connected end to end in sequence. Four corners of the rectangular frame are respectively fixedly connected to the underframe 21 by the vertical beams 221. A top end of at least one of the vertical beams 221 and a bottom end of an adjacent vertical beam 221 are respectively connected to both ends of the slanting beam 222. The provision of the slanting beam 222 makes the structure of the side-frame assembly 22 more stable. Preferably, the vertical beam 221 is perpendicular to the rectangular frame and the underframe 21, so that the overall structure of the mounting rack 2 is stable.

In summary, the mounting rack 2 is in a frame structure, and a high-strength material and a reasonable structural design are selected to ensure the stability of the structure. Compared with a box body with a plate structure, the material can be saved, it is beneficial for the heat dissipation of the energy storage device 1, and the normal operation is ensured.

In addition, as shown in Figure 1, the connecting member 3 is arranged on the first upper cross beam 223 adjacent to the energy storage device 1 so as to connect and fix an upper end face of the energy storage device 1. Two connecting members 3 are arranged on the first upper cross beam 223, so that two connection points are provided between the energy storage device 1 and the first upper cross beam 223 to realize a stable connection to the energy storage device 1. In other embodiments, one or more connecting members 3 may be provided according to the size and the weight of the energy storage device 1.

The connecting member 3 is also provided on the first lower cross beam 211 to connect and fix a bottom end of the energy storage device 1. An upper end and a lower end of the energy storage device 1 are fixedly connected to the mounting rack 2, respectively, which can obtain a fixed connection between the energy storage device 1 and the mounting rack 2 in all directions, so that a stable connection between the energy storage device 1 and the mounting rack 2 is achieved. Specifically, multiple connecting members 3 are provided on the first lower cross beam 211, where the multiple connecting members 3 are spaced apart in a length direction of the first lower cross beam 211. The multiple connecting members 3 cooperate to obtain a more stable connection between the energy storage device 1 and the first lower cross beam 211. In an embodiment, the multiple connecting members 3 are arranged at even intervals in the length direction of the first lower cross beam 211, which can ensure that the force on each connecting member 3 is uniform and avoid the separation of the connecting member 3 from the energy storage device 1 or the mounting rack 2 caused by excessive stress concentration of a single connecting member 3.

Specifically, the connecting member 3 includes two connecting plates perpendicular to each other. One of the two connecting plates is detachably connected to the side-frame assembly 22 or the underframe 21, and the other of the two connecting plates is detachably connected to the energy storage device 1, which can facilitate the quick disassembly and assembly of the energy storage device 1 and the mounting rack 2. In an embodiment, the connecting plate is connected to the mounting rack 2 or the energy storage device 1 by a bolt, and the disassembly and assembly manner of the bolt is easy for the operator to operate.

In order to facilitate of lifting and transportation of the energy storage system, as shown in Figure 1, corner fittings 4 are provided on all eight outermost corners of the mounting rack 2. The energy storage system can be fixed to a deck of a ship through the corner fittings 4, which can prevent the energy storage system from shaking back and forth on the deck of the ship, avoid collision between the energy storage system and the ship, and ensure good quality of the energy storage system. In addition, in case that multiple loaded energy storage systems are stacked, a twist lock can be used to connect and fix the energy storage systems of an upper layer and of a lower layer, improving the stability of the stacking of the multiple energy storage systems and ensuring safe transportation of the energy storage systems. In an embodiment, the corner fittings 4 are ISO standard parts, which are not described in detail here.

### Embodiment 2:

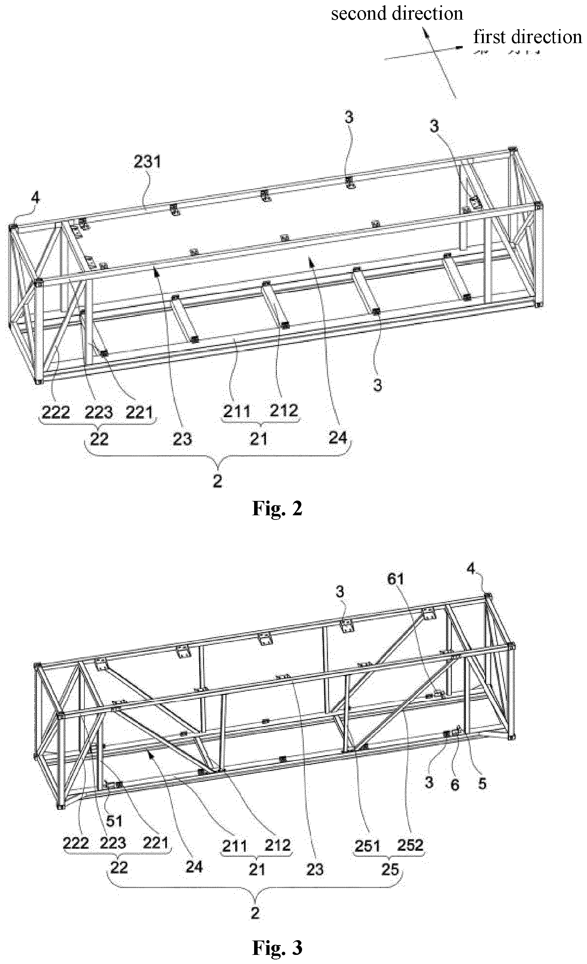

As shown in Figure 2, an energy storage system is provided according to Embodiment 2. The energy storage system according to Embodiment 2 is substantially the same as the energy storage system according to Embodiment 1, and the difference between the two lies in that the mounting rack 2 further includes an upper cross-beam assembly 23. The upper cross-beam assembly 23 is located above the underframe 21, and two ends of the upper cross-beam assembly 23 are respectively connected to the two side-frame assemblies 22. The provision of the upper cross-beam assembly 23 strengthens the stability of the mounting rack 2 and avoids the problem of scattering caused by vibration of the mounting rack 2. Moreover, the upper cross-beam assembly 23 can protect the upper end face of the energy storage device 1, further improving the transportation safety of the energy storage device 1.

Further, as shown in Figure 2, the upper cross-beam assembly 23 includes two second upper cross beams 231. The two second upper cross beams 231 extend in the first direction and are spaced apart in the second direction. Two ends of each of the two second upper cross beams 231 are respectively connected to the two side-frame assemblies 22. Multiple connecting members 3 arranged at intervals are provided on the second upper cross beam 231. The two second upper cross beams 231 are connected to the energy storage device 1 by the connecting members 3, further fixing the energy storage device 1 into the accommodation space 24.

In an embodiment, the multiple connecting members 3 are arranged at even intervals, which can avoid stress concentration of a single connecting member 3, and avoid the separation of the single connecting member 3 from the second upper cross beam 231 or the energy storage device 1, ensuring a stable connection between the energy storage device 1 and the mounting rack 2.

### Embodiment 3:

As shown in Figure 3, an energy storage system is provided according to Embodiment 3. The energy storage system according to Embodiment 3 is substantially the same as the energy storage system according to Embodiment 2, and the difference between the two lies in that the mounting rack 2 further includes multiple reinforcing ribs 25. Two ends of each of the multiple reinforcing ribs 25 are respectively connected to the upper cross-beam assembly 23 and the underframe 21, so that the structure of the mounting rack 2 is stable and the transportation safety is improved.

Further, the multiple reinforcing ribs 25 on one side of the mounting rack 2 is detachably connected to the upper cross-beam assembly 23 and the underframe 21. When the device is applied in site, the reinforcing rib 25 on one side of the mounting rack 2 can be removed to facilitate of the door-opening operation of the energy storage device 1. The reinforcing rib 25 on the other side of the mounting rack 2 can be welded to the underframe 21 and the upper cross-beam assembly 23, so that the welding operation is fast and stable.

Specifically, as shown in Figure 3, the multiple reinforcing ribs 25 include a first reinforcing rib 251 and a second reinforcing rib 252. In Embodiment 3, the number of the first reinforcing ribs 251 is two. The two first reinforcing ribs 251 are perpendicular to the second upper cross beam 231 and the first lower cross beam 211, which can provides a good support, so that the structure of the mounting rack 2 is stable. The second reinforcing rib 252 is obliquely arranged between the second upper cross beam 231 and the first lower cross beam 211, so that the structure of the mounting rack 2 is more stable. It should be noted that, the number of the first reinforcing ribs 251 and the number of the second reinforcing ribs 252 are not limited, which may be set to be one, two or more according to the size and strength requirements of the mounting rack.

Further, in order to enable the energy storage device 1 to be accurately loaded into the mounting rack 2, as shown in Figure 3, the mounting rack 2 further includes two sets of first limiting assemblies 5. The two sets of first limiting assemblies 5 are arranged on the underframe 21 and spaced apart in the second direction. The two sets of first limiting assemblies 5 can limit the position of the energy storage device 1 in the accommodation space 24 in the first direction.

Specifically, each of the two first limiting assemblies 5 includes two first limiting members 51. The two first limiting members 51 are spaced apart on the first lower cross beam 211 in the first direction, which can limit two sides of the energy storage device 1 in the first direction. When the energy storage device 1 is loaded on the mounting rack 2, the energy storage device 1 is fitted between the two first limiting members 51 for positioning, facilitating of the assembly of the energy storage device 1 and the mounting rack 2.

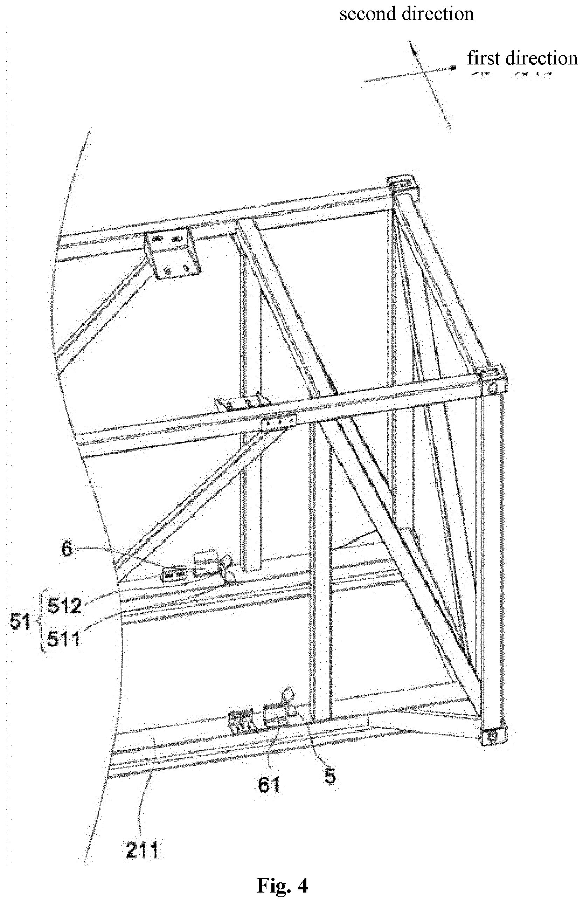

The specific structure of the first limiting member 51 is described below in conjunction with Figure 4. As shown in Figure 4, the first limiting member 51 includes a first plate 511 and a second plate 512 connected to each other. The first plate 511 and the second plate 512 are arranged in L shape. The first plate 511 is fixed to the first lower cross beam 211. The corresponding second plates 512 of two first limiting members 51 of the first limiting assembly 5 are arranged opposite to each other in the first direction. An end of the second plate 512 away from the first plate 511 is bent in a direction away from the energy storage device 1, so that a certain guiding effect can be achieved when the energy storage device 1 is being loaded, which can prevent the upper edge of the second plate 512 from colliding with the energy storage device 1.

Further, the mounting rack 2 further includes two sets of second limiting assemblies 6. The two sets of second limiting assemblies 6 are arranged on the underframe 21 and spaced apart in the first direction. The two sets of second limiting assemblies 6 can limit the position of the energy storage device 1 in the accommodation space 24 in the second direction.

Specifically, each of the two sets of second limiting assemblies 6 also includes two second limiting members 61. The two second limiting members 61 are respectively arranged on two different first lower cross beams 211 in the second direction, which can limit two sides of the energy storage device 1 in the second direction. When the energy storage device 1 is loaded on the mounting rack 2, the energy storage device 1 is fitted between the two second limiting members 61 for positioning, facilitating the assembly of the energy storage device 1 and the mounting rack 2.

The structure of the second limiting member 61 is the same as the structure of the first limiting member 51, which is not repeated here.

### Embodiment 4:

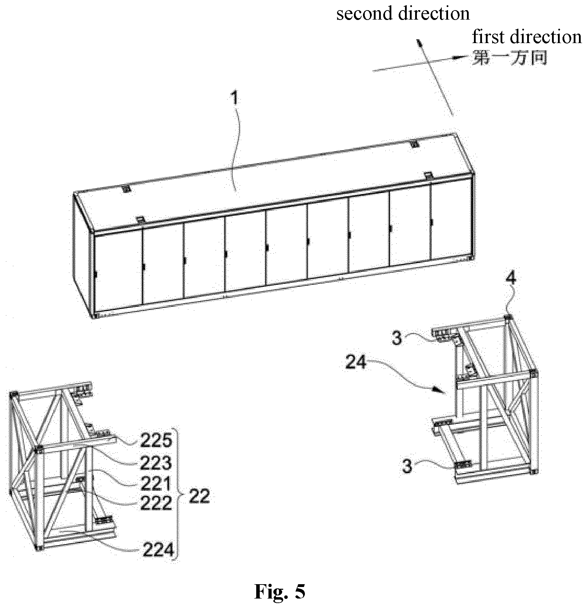

As shown in Figure 5, an energy storage system is provided according to Embodiment 4. The energy storage system according to Embodiment 4 is substantially the same as the energy storage system according to Embodiment 1, and the difference between the two lies in that the mounting rack 2 includes two side-frame assemblies 22, and two ends of the energy storage device 1 are respectively inserted and fitted into the corresponding side-frame assemblies 22. The two side-frame assemblies 22 jointly support the energy storage device 1. The mounting rack 2 supports and protects the two ends of the energy storage device 1. Compared with the energy storage system according to Embodiment 1, the material of the mounting rack 2 according to Embodiment 3 is saved, so that the manufacturing cost of the mounting rack 2 can be effectively reduced, and the lightweight of the mounting rack 2 can also be realized.

Specifically, as shown in Figure 5, each of the two side-frame assemblies 22 includes a side frame body and a fixing part 225. The side frame body is in a cubic frame structure. The fixing parts 225 are formed by extending four corners on the side, which faces the opposite side frame body, of each side frame body extend in the first direction. The fixing parts 225 of the four corners of the side frame body are arranged around an outer periphery of one side of the energy storage device 1. A connecting member 3 is provided on the fixing part 225. The fixing part 225 is fixedly connected to the energy storage device 1 by the connecting member 3, which can achieve a good fixation effect on the energy storage device 1.

The structure of the side frame body is described with reference to Figure 5. As shown in Figure 5, an upper end of the side frame body is a rectangular frame surrounded by four first upper cross beams 223 that are connected end to end in sequence. Vertical beams 221 are respectively connected to four corners of the rectangular frame. The vertical beams 221 are perpendicular to the rectangular frame. Lower ends of adjacent vertical beams 221 are connected through a third lower cross beam 224, which can make the structure of the side frame body more stable.

### Embodiment 5:

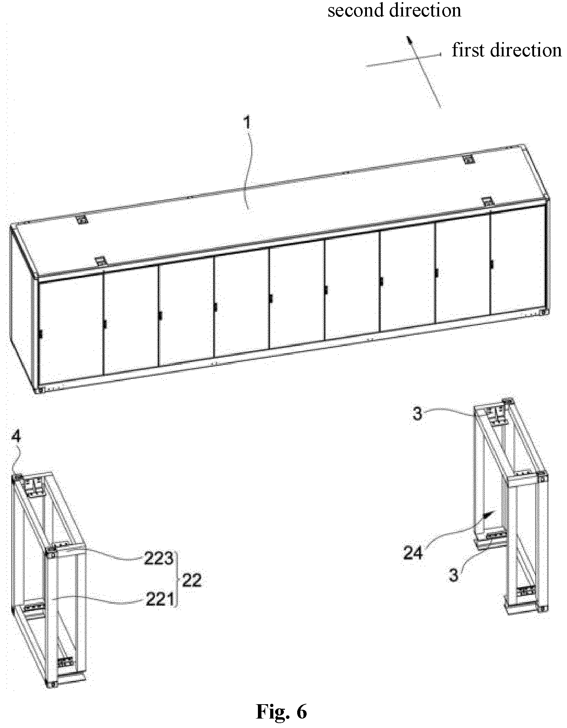

As shown in Figure 6, an energy storage system is provided according to Embodiment 5. The energy storage system according to Embodiment 5 is substantially the same as the energy storage system according to Embodiment 4, and the difference between the two lies in that the side-frame assembly 22 includes two rectangular frames and four vertical beams 221. The two rectangular frames are spaced apart in a vertical direction. Each of the two rectangular frames includes four first upper cross beams 223 that are connected end to end in sequence. The corresponding corners of the two rectangular frames are respectively fixedly connected to the four vertical beams 221. The four vertical beams 221 are respectively connected to four corners of the two rectangular frames. The vertical beams 221 are perpendicular to the rectangular frames. Compared with the side-frame assembly 22 according to Embodiment 3, the side-frame assembly 22 according to this embodiment has a simpler structure and is easier to be manufactured, which can further reduce the manufacturing cost of the side-frame assembly 22.

Further, a connecting member 3 is provided on the first upper cross beam 223 arranged in the first direction. The connection between the side-frame assembly 22 and the energy storage device 1 is obtained by the connecting member 3, so that the space of the rectangular frame can be properly used, and the energy storage system has a compact structure and occupies little space.

Obviously, the above embodiments of the present application are only intended to provide a clear explanation of the examples provided, and are not intended to limit the embodiments of the present application. For ordinary technical personnel in the field, they can make various obvious changes, readjustments, and substitutions without departing from the scope of protection of the present application. There is no need and cannot be an exhaustive list of all implementation methods here. Any modifications, equivalent substitutions, and improvements made within the spirit and principles of the present application shall be included within the scope of protection of the claims of the present application.

## Claims

1. An energy storage system comprising:
a mounting rack (2) with an accommodation space (24);
an energy storage device (1) arranged into the accommodation space (24); and
connecting members (3), wherein the mounting rack (2) and the energy storage device (1) are connected by the connecting members (3).

2. The energy storage system according to claim 1, wherein the mounting rack (2) comprises:
a underframe (21) supporting the energy storage device (1); and
two side-frame assemblies (22) respectively connected to both ends of the underframe (21),
wherein the accommodation space (24) is enclosed by the underframe (21) and the two side-frame assemblies (22).

3. The energy storage system according to claim 2, wherein the underframe (21) comprises:
two first lower cross beams (211), which extends in a first direction and are arranged in parallel and spaced apart in a second direction, wherein the first direction is perpendicular to the second direction; and
at least two second lower cross beams (212), which are arranged at intervals in the first direction, wherein two ends of each of the at least two second lower cross beams (212) are respectively connected to the two first lower cross beams (211), and the two first lower cross beams (211) and the at least two second lower cross beams (212) jointly support the energy storage device (1).

4. The energy storage system according to claim 2, wherein each of the two side-frame assemblies (22) comprises:
a rectangular frame located above the underframe (21), wherein the rectangular frame comprises four first upper cross beams (223) connected end to end in sequence;
vertical beams (221), wherein four corners of the rectangular frame are respectively fixedly connected to the underframe (21) by the vertical beams (221); and
a slanting beam (222), wherein a top end of one of the vertical beams (221) and a bottom end of an adjacent one of the vertical beams (221) are respectively connected to both ends of the slanting beam (222).

5. The energy storage system according to claim 2, wherein the mounting rack (2) further comprises:
an upper cross-beam assembly (23) located above the underframe (21), wherein both ends of the upper cross-beam assembly (23) are respectively connected to the two side-frame assemblies (22).

6. The energy storage system according to claim 5, wherein the two side-frame assemblies (22), the underframe (21), and the upper cross-beam assembly (23) are connected to the energy storage device (1) by the connecting members (3), respectively.

7. The energy storage system according to claim 6, wherein each of the connecting members (3) comprises two connecting plates perpendicular to each other, one of the two connecting plates is detachably connected to the two side-frame assemblies (22), the underframe (21), or the upper cross-beam assembly (23), and the other of the two connecting plates is detachably connected to the energy storage device (1).

8. The energy storage system according to claim 5, wherein the mounting rack (2) further comprises:
a plurality of reinforcing ribs (25), wherein both ends of each of the plurality of reinforcing ribs (25) are respectively connected to the upper cross-beam assembly (23) and the underframe (21).

9. The energy storage system according to claim 8, wherein those of the plurality of reinforcing ribs (25) on one side of the mounting rack (2) are detachably connected to the upper cross-beam assembly (23) and the underframe (21).

10. The energy storage system according to claim 5, wherein the mounting rack (2) further comprises:
two sets of first limiting assemblies (5) arranged on the underframe (21) and spaced apart in the second direction, wherein the two sets of first limiting assemblies (5) are configured to limit the position of the energy storage device (1) in the accommodation space (24) in the first direction.

11. The energy storage system according to claim 5, wherein the mounting rack (2) further comprises:
two sets of second limiting assemblies (6) arranged on the underframe (21) and spaced apart in the first direction, wherein the two sets of second limiting assemblies (6) are configured to limit the position of the energy storage device (1) in the accommodation space (24) in the second direction.

12. The energy storage system according to claim 1, wherein the mounting rack (2) comprises:
two side-frame assemblies (22), wherein both ends of the energy storage device (1) are inserted and fitted into the two side-frame assemblies (22), respectively, and the two side-frame assemblies (22) jointly support the energy storage device (1).

13. The energy storage system according to claim 12, wherein each of the two side-frame assemblies (22) comprises:
a side frame body, which is of a cubic frame structure; and
fixing parts (225), wherein the fixing parts (225) are formed by extending four corners on a side, which faces the other side-frame assembly (22), of the side frame body of one side-frame assembly (22) in the first direction, the fixing parts (225) arranged at the four corners of the side frame body are arranged around an outer periphery of one side of the energy storage device (1), and each of the fixing parts (225) is fixedly connected to the energy storage device (1) by the connecting member (3).

14. The energy storage system according to any one of claims 1 to 13, wherein the energy storage system further comprises:
corner fittings (4), which are arranged at outermost corners of the mounting rack (2).
